# EUROPÄISCHE PATENTSCHRIFT

(11) **EP 3 269 223 B1**
(45) Veröffentlichungstag und Bekanntmachung des Hinweises auf die Patenterteilung: **22.04.2020**
(21) Anmeldenummer: 16198814.2
(22) Anmeldetag: 15.11.2016
(51) Int. Cl.: A01D 34/835, A01D 45/02

(54) **ERNTEVORSATZ MIT EINER MULCHEINRICHTUNG**
HARVESTING ATTACHMENT WITH A MULCHING DEVICE
TÊTE DE RÉCOLTE COMPRENANT UN DISPOSITIF DE PAILLAGE

(30) Priorität: 12.07.2016 DE 102016212621; 20.07.2016 DE 102016213260; 02.08.2016 DE 102016214256; 29.09.2016 DE 102016218857
(43) Veröffentlichungstag der Anmeldung: 17.01.2018
(73) Patentinhaber: Deere & Company, Moline, IL 61265 (US)
(72) Erfinder: Awater, Klaus, 46459 Rees-Haldern (DE); Weitenberg, Clemens, 46325 Borken (DE); Hüning, Martin, 48727 Billerbeck (DE)
(74) Vertreter: Holst, Sönke

(56) Entgegenhaltungen:
- WO-A1-2008/104816
- WO-A1-2014/012620
- FR-A5- 2 083 951
- US-A- 3 984 966

## Beschreibung

Die Erfindung betrifft einen Emtevorsatz zur Maisernte nach dem Oberbegriff des Anspruchs 1.

### Technologischer Hintergrund

Unterhalb von Erntevorsätzen zur Maisernte werden in vielen Fällen Mulchgeräte zur Zerkleinerung und/oder Zerfaserung der nach der Ernte auf dem Feld verbleibenden Pflanzenstümpfe angebracht, sei es zur Schonung der Reifen der auf dem Feld fahrenden Fahrzeuge, zur Verbesserung der Verrottung der Pflanzenreste oder zur Vernichtung des Überwinterungsraumes des Maiszünslers (*Ostrinia nubilalis*).

Die DE 35 15 295 A1 zeigt einen Maispflücker mit einer Anzahl seitlich nebeneinander angeordneter Reiheneinheiten und einem derartigen Mulchgerät, das sich über die gesamte Breite des Maispflückers erstreckt und den Reiheneinheiten zugeordnete, an einer antreibbaren, horizontalen Welle befestigte Messer trägt. Die Welle ist innerhalb eines Gehäuses angeordnet, das vorderseitig um eine zur Welle parallele Achse schwenkbar am Rahmen des Maispflückers angelenkt ist und sich durch Kufen auf dem Boden abstützt. Die mit dem Boden in Berührung kommenden Bereiche der Kufen liegen genau unterhalb der Drehachse der Welle.

Die DE 39 34 862 A1 zeigt einen ähnlichen Stängelhäcksler an einem Maispflücker, wobei die zum Zerkleinern der Erntegutreste dienenden Messer jedoch um vertikale Achsen rotieren und durch Gelenkwellen oder Hydromotoren angetrieben werden.

In der als gattungsbildend angesehenen DE 10 2004 020 447 A1 wird ein Mähvorsatz zur Ernte ganzer Maispflanzen gezeigt, an dessen Unterseite seitlich nebeneinander Mulchgeräte mit um die Hochachse rotierenden Messern angebracht sind. Die Mulchgeräte sind durch Parallelogrammlenker am Mähvorsatz höhenverstellbar angebracht und stützen sich unterhalb der Drehachsen der Messer durch Kufen am Erdboden ab, und ihr Antrieb kann von rotierend angetriebenen Schneid- und Fördereinrichtungen abgezweigt werden.

Die WO 2014/012620 A1 zeigt einen Maispflücker mit seitlich nebeneinander angeordneten Pflückeinheiten, unter denen Stängelhäcksler angeordnet sind. Rückwärtig der Pflückeinheiten sind separate Häcksler angeordnet, die einen um die Querachse drehenden Rotor umfassen, an dem mehrere Messer angebracht sind, um die im Boden verbliebenen Maisstängel zu zerkleinern. Die Häcksler sind an Schwingen abgestützt, die sich an Kufen auf dem Boden abstützen und am vorderen Ende am Getriebegehäuse der zugehörigen Pflückeinheit um die Querachse frei schwenkbar abgestützt werden. Innerhalb der Schwingen sind auch Kettentriebe zum Antrieb des Rotors der Häcksler angeordnet.

Die FR 2 083 951 A zeigt einen Maispflücker mit um die Hochachse rotierenden Häckseleinheiten, die jeweils rückwärtig einer Pflückeinheit um eine quer verlaufende Achse schwenkbar am Rahmen des Pflückers angelenkt sind und sich mit ihren vorderen Enden auf einer Kufe auf dem Boden abstützen. Der Antrieb der Häckseleinheiten erfolgt über eine nur den Häckseleinheiten zugeordnete Querwelle.

Die WO 2008/104816 A1 zeigt einen weiteren Maispflücker mit um die Hochachse rotierenden, hydraulisch angetriebenen Häckseleinheiten, die jeweils rückwärtig einer Pflückeinheit durch ein Parallelogramm höhenverstellbar am Rahmen des Pflückers befestigt sind und sich auf einer Kufe auf dem Boden abstützen.

In der US 3 984 966 A wird ein Maispflücker mit rückwärtig der Pflückeinheiten angeordneten, um die Hochachse rotierenden Stoppelhäckslern beschrieben. Die untereinander starr verbundenen Gehäuse der Stoppelhäcksler sind mit ihren vorderen Seiten um die Querachse schwenkbar am Rahmen des Pflückers angelenkt und an ihren hinteren Enden durch einen Hydraulikzylinder und ein damit gekoppeltes Seil höhenverstellbar. Zudem werden sie durch eine Feder abgestützt. Bei angehobenem Schrägförderer des Mähdreschers kann demnach die Neigung des Stoppelhäckslers zwischen einer vertikalen Drehachse, die bei normal wachsendem Erntegut eingestellt werden soll, und einer nach vorn und unten geneigten Drehachse verstellt werden, die bei schwerem Wachstum verwendet werden soll. Der Antrieb der Häckseleinheiten erfolgt über eine nur den Häckseleinheiten zugeordnete Querwelle.

### Aufgabe

Die Mulchgeräte nach DE 35 15 295 A1, DE 39 34 862 A1 und DE 10 2004 020 447 A1 erstrecken sich jeweils über die gesamte Breite des Maiserntegeräts und bewegen sich gemeinsam nach oben und unten, wenn die sie abstützenden und ihre vertikale Position definierenden Kufen Bodenwellen überfahren, während die Anordnung nach US 3 984 966 A zur Höhenanpassung des Häckslers einen zugeordneten Aktor verwendet, um alle Stängelhäcksler des Maispflückers gemeinsam in der Höhe zu verstellen. Sollte der Boden jedoch quer zur Vorwärtsrichtung Vertiefungen aufweisen, werden die dort stehenden Stoppeln nur in relativ großer Höhe über dem Boden bearbeitet. Sollte der Boden in Querrichtung eine Erhöhung aufweisen, die nicht mit einer Kufe zusammenwirkt, können die Messer in diese Erhöhung hineingreifen, was zur vorzeitigen Abnutzung oder Beschädigung der Messer führt. Die Häckseleinheiten gemäß WO 2008/104816 A1, WO 2014/012620 A1 und FR 2 083 951 A1 sind individuell höhenverstellbar an den jeweiligen Reiheneinheiten des Maispflückers angebracht, wobei aber die Antriebe der Häckseleinheiten durch Hydromotoren, Ketten bzw. separate Querwellen aufwändig bzw. verschleißbehaftet ist.

Die der Erfindung zu Grunde liegende Aufgabe wird darin gesehen, einen Erntevorsatz zur Ernte ganzer Maispflanzen bereitzustellen, bei dem die erwähnten Nachteile nicht oder in vermindertem Maße vorliegen.

### Lösung

Die vorliegende Erfindung wird durch die Patentansprüche definiert.

Ein Erntevorsatz zur Maisernte umfasst einen in einer Vorwärtsrichtung über ein Feld bewegbaren Rahmen, an dem mehrere seitlich nebeneinander positionierte Ernteeinrichtungen zur Ernte von Maispflanzen und stromab der Ernteeinrichtungen angeordnete Mulcheinrichtungen mit aktiv antreibbaren Elementen zur zerkleinernden, zerfasernden oder anderweitig zerstörenden Bearbeitung der nach dem Ernten im Boden verbliebenen Pflanzenstümpfe angebracht sind, die gegenüber dem Rahmen höhenbeweglich und auf der Bodenkontur folgenden, unterhalb der Elemente angeordneten Kufen abgestützt sind, d.h. tiefer als die Elemente positioniert sind. Die Mulcheinrichtungen sind getrennt voneinander höhenbeweglich am Rahmen angebracht. Der Erntevorsatz ist in Form eines Mähvorsatzes zur Ernte ganzer Maispflanzen ausgeführt und mit mehreren Mäh- und Einzugseinrichtungen ausgestattet, die in Form von Mäh- und Einzugseinrichtungen mit um etwa vertikale Achsen rotierenden, übereinander angeordneten Förderscheiben mit um den Rand verteilten Aussparungen zum Abtransport der Pflanzen und darunter angeordneten Schneidscheiben ausgeführt sind. Die Wellen der Mulcheinrichtungen sind jeweils über ein zugeordnetes Getriebe antreibbar, welches die Welle mit einer in einem hohlen Querträger des Rahmens angeordneten, zum Antrieb der Mäh- und Einzugseinrichtungen dienenden Antriebswelle antriebsmäßig verbindet und um die Achse der Antriebswelle frei schwenkbar gelagert ist.

Auf diese Weise erreicht man, dass die Mulcheinrichtungen getrennt voneinander der Bodenkontur folgen, was die oben erwähnten Nachteile vermeidet. Die Höhenführung der Mulcheinrichtungen erfolgt durch ihre Kufen jeweils in vertikaler Richtung insbesondere genau unterhalb der Drehachse der Mutcheinrichtungen oder rückwärtig davon, was ein versehentliches Eindringen der aktiven Elemente der Mulcheinrichtung in den Boden oder eine unvollständige Bearbeitung der Stoppeln vermeidet.

Die Mulcheinrichtungen sind getrennt voneinander um sich quer zur Vorwärtsrichtung des Erntevorsatzes und horizontal erstreckende Achsen schwenkbar am Rahmen angelenkt. Es wäre auch denkbar, sie in vertikaler Richtung verschiebbar zu lagern.

Die Elemente können um eine schräg nach vorn und unten geneigte Drehachse antreibbar sein.

Die Kufen der Mulcheinrichtungen (und somit auch die Mulcheinrichtungen) können jeweils durch eine Feder und/oder die Schwerkraft in Richtung auf den Boden vorgespannt sein.

### Ausführungsbeispiel

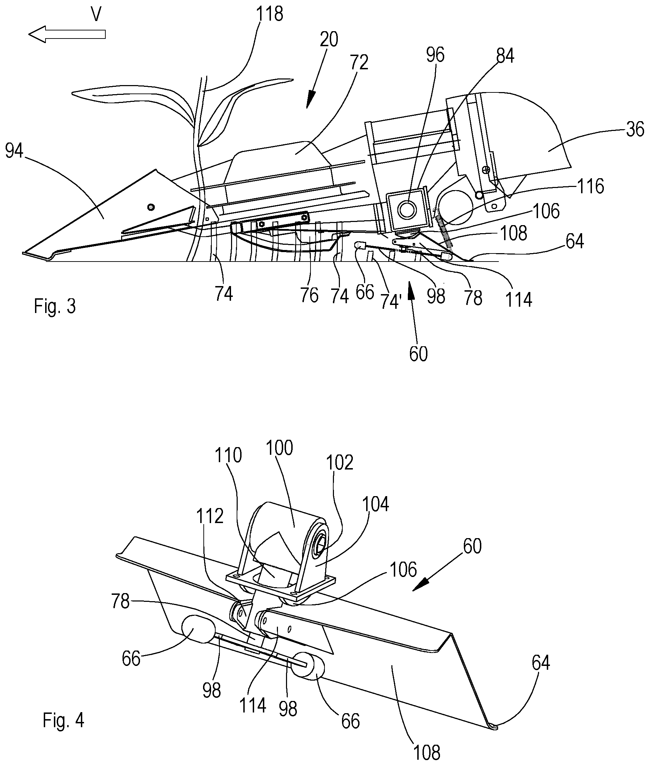

Anhand der Abbildungen werden zwei Ausführungsbeispiele erläutert, wobei die Bezugszeichen nicht zur einschränkenden Auslegung der Ansprüche herangezogen werden dürfen und die Ausführungsform nach Figur 2 nicht unter die Ansprüche fällt. Es zeigen:
- Fig. 1: eine Erntemaschine mit einem Erntevorsatz zur Maisernte und darunter angebrachten Mulcheinrichtungen in Seitenansicht und in schematischer Darstellung,
- Fig. 2: eine perspektivische Ansicht einer Mulcheinrichtung die nicht Anspruch 1 entspricht,
- Fig. 3: eine Seitenansicht einer Ausführungsform eines Erntevorsatzes bei der Ernte, und
- Fig. 4: eine perspektivische Ansicht des Mulchgeräts des Erntevorsatzes der Figur 3.

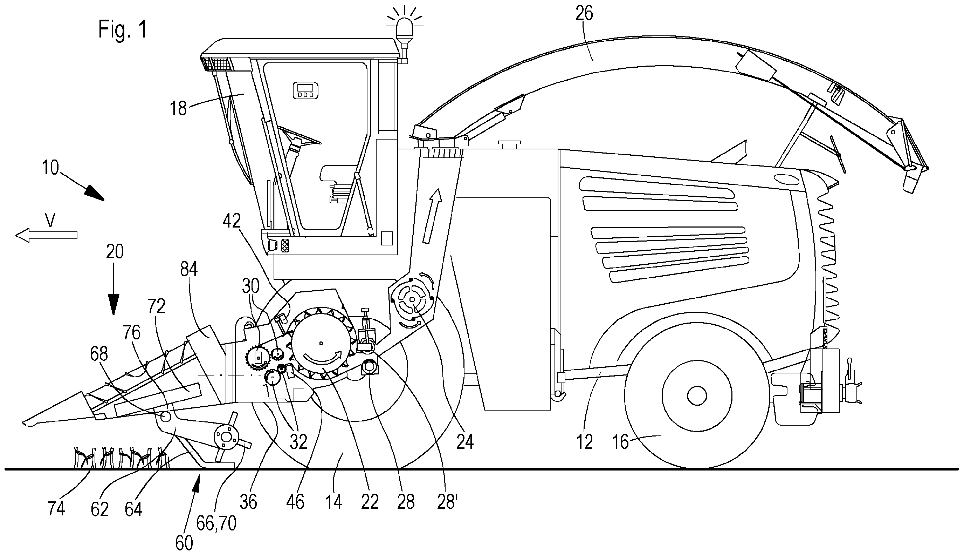

Eine in der Figur 1 gezeigte selbstfahrende Erntemaschine 10 in der Art eines Feldhäckslers baut sich auf einem Fahrgestell 12 auf, das von angetriebenen vorderen Rädern 14 und lenkbaren rückwärtigen Rädern 16 getragen wird und im Erntebetrieb in einer Vorwärtsrichtung V über ein Feld bewegt wird. Die Bedienung der Erntemaschine 10 erfolgt von einer Fahrerkabine 18 aus, von der aus ein Erntevorsatz 20 einsehbar ist. Mittels des Erntevorsatzes 20 vom Boden aufgenommenes Gut, z. B. Mais oder Sonnenblumen, wird im Erntebetrieb durch in einem Einzugsgehäuse 36 angeordnete Vorpresswalzen 30, 32 einer Häckseltrommel 22 zugeführt, die es im Zusammenwirken mit einer Gegenschneide 46 in kleine Stücke häckselt und es einem Nachbeschleuniger 24 aufgibt. Die Messer der Häckseltrommel 22 können bei Bedarf durch eine Schleifeinrichtung 42 geschärft werden. Das Gut verlässt die Erntemaschine 10 zu einem nebenher fahrenden Anhänger über einen höhenverstellbaren und um die Hochachse drehbaren Auswurfkrümmer 26. Zwischen der Häckseltrommel 22 und der Fördervorrichtung 24 erstreckt sich (bei der Ernte von Mais) eine Nachzerkleinerungsvorrichtung mit Walzen 28, 28', durch die das zu fördernde Gut dem Nachbeschleuniger 24 tangential zugeführt wird.

Der Erntevorsatz 20 dient zur Ernte ganzer Maispflanzen 118 (s. Figur 3) und umfasst eine Anzahl an seitlich nebeneinander angeordneten Ernteeinrichtungen in Form von Mäh- und Einzugseinrichtungen 72 mit um etwa vertikale Achsen rotierenden, übereinander angeordneten Förderscheiben und darunter angeordneten Schneidscheiben um den Rand verteilten Aussparungen zum Abtransport der Pflanzen, wie sie beispielsweise in der EP 0 760 200 A1 beschrieben werden. Die Mäh- und Einzugseinrichtungen werden durch Getriebegehäuse 76 an einem Rahmen 84 des Erntevorsatzes 20 abgestützt.

Unterhalb des Erntevorsatzes 20 sind seitlich nebeneinander mehrere, jeweils einer Mäh- und Einzugseinrichtungen 72 zugeordnete Mulcheinrichtungen 60 angeordnet, die dazu dienen, die nach dem Abernten der auf dem Maispflanzen im Boden verbleibenden Pflanzenstümpfe 74 zu zerkleinern, um insbesondere den Überwinterungsraum des Maiszünslers zu zerstören. Die Mulcheinrichtungen 60 umfassen als Elemente 66 zur Bearbeitung der Pflanzenstümpfe 74 um eine mittige Welle 78 (s. Figur 2) verteilte Messer 70. Die Welle 78 ist horizontal und quer zur Vorwärtsrichtung orientiert und wird durch einen Hydromotor 80 angetrieben. Die Welle 78 erstreckt sich zwischen zwei Armen 62 und ist daran jeweils drehbar gelagert.

Die Arme 62 erstrecken sich von der Welle 78 nach vorn bis zu einer Lagerung 68, an welcher die Arme 62 an einem Querträger 82 frei um die Querachse schwenkbar gelagert sind. Der Querträger 82 ist seinerseits mittig um eine vertikale Achse 86 frei schwenkbar am Rahmen 84 gelagert, z.B. am Getriebegehäuse 76 oder einem damit verbundenen Halterungselement.

Etwa in der Mitte der Arme 62 sind nach unten gebogene Kufen 64 angebracht, die sich von dort nach hinten und unten erstrecken und sich genau unterhalb der Drehachse der Welle 78 in Bodenberührung befinden. Die Arme 62 sind untereinander durch die Welle 78 und ggf. weitere Querverbindungen (nicht gezeigt) verbunden und bewegen sich gemeinsam um die Lagerung 68 (und um die Achse 86).

Die Messer 70 sind durch Schrauben 90 an Konsolen 88 der Welle 78 lösbar befestigt. Sie können starr oder pendelnd aufgehängt sein. Die Messer 66 sind etwa auf halber Länge um etwa 45° nach außen in axialer Richtung abgewinkelt. An einer Konsole 88 sind jeweils zwei Messer 66 paarweise befestigt, die gegensinnig abgewinkelt sind.

Nach alledem erhält man folgende Wirkungsweise der Mutcheinrichtungen 60, von denen jeweils eine oder mehrere der einen oder den mehreren Mäh- und Einzugseinrichtungen 72 zugeordnet sein können und in Querrichtung des Erntevorsatzes 20 dort angebracht sind, wo die Maispflanzen 118 in Normalbetrieb einlaufen, um die nach dem Abschneiden der Pflanzen 118 durch die Mäh- und Einzugseinrichtungen 72 im Boden verbleibenden Pflanzenstümpfe 74 zu bearbeiten. Die Kufen 64 liegen bezüglich der Vorwärtsrichtung V exakt unterhalb der Drehachse der Welle 78 auf dem Erdboden auf und definieren den Winkel der Arme 62 um die Lagerung 68. Die Kufen 64 lassen zwischen sich einen Zwischenraum 92, durch den die Pflanzenstümpfe 74 hindurchlaufen können, wenn der Erntevorsatz 20 über das Feld bewegt wird. Die Pflanzenstümpfe 74 werden durch die Elemente 66 der Mulcheinrichtung 60, d.h. die Messer 70, zerkleinert oder zerfasert. Die Mulcheinrichtung 60 folgt problemlos der Bodenkontur, auch wenn der Boden Wellen in Vorwärtsrichtung haben sollte. Durch die getrennte Aufhängung aller Mulcheinrichtungen 60 erreicht man, dass alle Mulcheinrichtungen 60 der Bodenkontur auch dann genau folgen, wenn der Boden Wellen in Querrichtung aufweist. Die Kufen 64, zwischen denen die Pflanzenstümpfe 74 hindurchlaufen, lenken die Mulcheinrichtung zudem in seitlicher Richtung und dienen demnach als Führungsmittel, welche die Mulcheinrichtung 60 entlang der Pflanzenstümpfe 74 führt. Sollten die Pflanzenstümpfe 74 nicht auf einer geraden Reihe liegen, sondern in einer Kurve angebaut sein, oder der Erntevorsatz 20 der Reihe der Pflanzen nicht genau folgen, würden die Pflanzenstümpfe 74 die Kufen 64 und somit die gesamte Mulcheinrichtung 60 um die Achse 86 drehen und dafür sorgen, dass die Pflanzenstümpfe 74 dennoch von der Mulcheinrichtung 60 erfasst und zerkleinert werden. Bei einer anderen, nicht gezeigten Ausführungsform könnten die Kufen 64 rückwärtig der Drehachse der Welle 78 in Bodenberührung sein, anstelle genau darunter. Hierzu sei auf die Offenbarung der DE 10 2016 212 621 A1 verwiesen, die durch Verweis mit in die vorliegenden Unterlagen aufgenommen wird. Auch könnte eine aktive seitliche Verstellung der Mulcheinrichtung 60 erfolgen, damit sie den Pflanzenreihen folgt, wie im soeben erwähnten Dokument beschrieben wird.

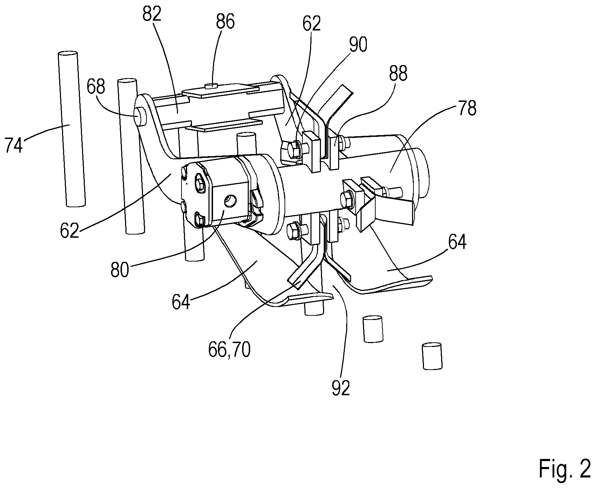

Die Figuren 3 und 4 zeigen eine zweite Ausführungsform eines Erntevorsatzes 20, der in Vorwärtsrichtung V an der Frontseite der Erntemaschine 10 der Figur 1 befestigt werden kann. Der Erntevorsatz 20 ist in der der dargestellten Ausführungsform ein an sich bekannter Maismähvorsatz, der einen Mittelteil und zwei (bezüglich der Vorwärtsrichtung der Erntemaschine 10) seitlich links und rechts neben dem Mittelteil angeordneten Seitenteile umfassen kann. Die Seitenteile sind zum Straßentransport nach oben schwenkbar am Mittelteil befestigt und können zum Ernteeinsatz hydraulisch heruntergeschwenkt werden, so dass sie beim Erntebetrieb parallel zum Mittelteil verlaufen. Anschließend können sie wieder hinauf geschwenkt werden. Der Erntevorsatz 20 ist in an sich bekannter Weise mit den Mäh- und Einzugseinrichtungen 72, Teilerspitzen 94 und Abdeckplatten und Fördermitteln ausgestattet, um das geerntete Gut der Häckseltrommel 22 der Erntemaschine 10 zuzuführen. Der Erntevorsatz 20 zieht im Betrieb die Stängel des Mähguts 118 in aufrechter Stellung ein, schneidet sie ab und führt sie dem Einzugsgehäuse 36 und anschließend der Häckseltrommel 22 der Erntemaschine 10 zu.

Der Erntevorsatz 20 umfasst den Rahmen 84, der einen sich unten an der Rückseite des Erntevorsatzes 20 erstreckenden Querträger umfasst, der sich aus drei Segmenten zusammensetzt, von denen jeweils eines am Mittelteil 38 und eines an jedem Seitenteil 40 angeordnet ist. An der Vorderseite des unteren Querträgers sind die Getriebegehäuse 76 angeschraubt, die zum Antrieb jeweils einer Mäh- und Einzugseinrichtung 72 dienen. Eine Antriebswelle 96 zum Antrieb der Mäh- und Einzugseinrichtungen 72 über in den Getriebegehäusen 76 angeordnete Getriebe, die auch zum Antrieb der weiteren Fördermittel des Erntevorsatzes 20 dient und von einer Abtriebswelle der Erntemaschine 10 angetrieben wird, erstreckt sich in seitlicher Richtung innerhalb des hohlen unteren Querträgers.

Die Figur 3 zeigt den Erntevorsatz 20 in einer Position, die er beim Ernten einnimmt, wofür das Einzugsgehäuse 36 durch einen Aktor (nicht gezeigt) um die Drehachse der Häckseltrommel 22 aus der in Figur 1 gezeigten Position abgesenkt wird. Dieser Aktor kontrolliert auch die Höhe des Erntevorsatzes 20 über dem Boden, in einer an sich bekannten, auf Fühlern basierenden Weise.

Rückwärtig jeder Mäh- und Einzugseinrichtung 72 ist jeweils ein Mulchgerät 60 angebracht. Das Mulchgerät 60 ist mit seiner Drehachse in seitlicher Richtung rückwärtig von der Drehachse der zugehörigen Mäh- und Einzugseinrichtung 72 angeordnet. Dort laufen im normalen Erntebetrieb die Pflanzen ein. Falls eine Mäh- und Einzugseinrichtung 72 mehrere Pflanzenreihen aberntet, können ihr mehrere Mulchgeräte 60 zugeordnet werden, deren Drehachsen rückwärtig der zu erwartenden Einlaufstellen der Pflanzenreihen angeordnet sind. Es wäre auch denkbar, die Mulchgeräte 60 lückenlos oder mit kleinen Lücken über die ganze Arbeitsbreite des Erntevorsatzes 20 zu verteilen.

Es wird nun auf die Figuren 3 und 4 verwiesen. Das Mulchgerät 60 umfasst zwei sich diametral gegenüber liegende Elemente 66 zur Bearbeitung der Pflanzenstümpfe 74, die über radiale Arme 98 starr mit einer mittigen Welle 78 verbunden sind. Anstelle starrer Arme 98 könnten die Elemente 66 zur Bearbeitung der Pflanzenstümpfe 74 auch durch Ketten oder andere, flexible Elemente mit der Welle 78 verbunden sein. Die Elemente 66 zur Bearbeitung der Pflanzenstümpfe 74 sind als stumpfe Schlagkörper ausgeführt, d.h. kugel- oder zigarrenförmig geformt. Als Elemente 66 zur Bearbeitung der Pflanzenstümpfe 74 könnten alternativ oder zusätzlich schneidende Messer verwendet werden, wie sie üblicherweise unter Maispflückern eingebaut werden. Diese Messer können starr oder pendelnd mit der Welle 78 verbunden werden.

Die Welle 78 ist an ihrem unteren Ende mit den Armen 98 verbunden und an ihrem oberen Ende in einem Getriebe 100 gelagert. Durch eine Hohlwelle 102 des Getriebes 100 erstreckt sich die Antriebswelle 96 und ist formschlüssig mit der sechseckigen Hohlwelle 102 gekoppelt. Das Getriebe 100 enthält Antriebselemente (nicht gezeigt), welche die Hohlwelle 102 mit der Welle 78 antriebsmäßig verbinden, z.B. Kegelräder. Das Getriebe 100 ist gegenüber der Antriebswelle 96 und dem unteren Querträger des Rahmens 84 um die Achse der Antriebswelle 96 frei schwenkbar gelagert.

Weiterhin ist eine das Getriebe 100 von den beiden Seiten her umschließende Konsole 104 starr mit dem unteren Querträger des Rahmens 84 verbunden. Ein unteres, die beiden seitlich am Getriebe 100 anliegenden Bleche der Konsole 104 verbindendes Blech ist an seiner Unterseite mit einem Anschlagelement 106 verbunden, das im Zusammenwirken mit einem Abdeckblech 108 dazu dient, den Bewegungsbereich der Welle 78 und somit der Elemente 66 zur Bearbeitung der Pflanzenstümpfe 74 einzuschränken und Kollisionen mit anderen Teilen des Erntevorsatzes 20 zu vermeiden.

Am Gehäuse des Getriebes 100 ist eine Hohlachse 110 angebracht, welche die Welle 78 zwischen dem Getriebe 100 und einem unteren, geringfügig oberhalb der Arme 98 liegenden Ende konzentrisch umschließt. Die Hohlachse 110 ist mit dem Getriebe 100 und der Welle 78 frei gegenüber dem unteren Querträger des Rahmens 84 um die Längsachse der Antriebswelle 96 schwenkbar. An ihrem unteren Ende trägt die Hohlachse 110 einen Flansch 112, an dem eine Halterung 114 angebracht ist. Die Halterung 114 ist starr mit dem Abdeckblech 108 verbunden. Das Abdeckblech 108 erstreckt sich über die Breite des Mulchgeräts 60 und ist etwas breiter als der Durchmesser des von den Elementen 66 beschriebenen Hüllkreises. Das Abdeckblech 108 erstreckt sich in Vorwärtsrichtung V von der Mitte der Hohlachse 110 und von dort schräg nach hinten und unten bis zu einer rückwärtigen Kufe 64, die auf dem Boden aufliegt. Eine (Druck-) Feder 116 ist zwischen dem Tragrahmen 84 des Erntevorsatzes 20 und dem Abdeckblech 108 angeschlossen und drückt das Abdeckblech 108 nach unten. Zur Anpassung an die Ebenheit des Bodens kann die Kufe 64 gegenüber dem Abdeckblech 108 (und/oder das Abdeckblech 108 gegenüber der Hohlachse 110) verstellbar sein, um die Elemente 66 zur Bearbeitung der Pflanzenstümpfe 74 in ihrer rückwärtigen Stellung bei ebenerem Boden weiter nach unten zu stellen als bei unebenerem Boden.

Nach alledem ergibt sich folgende Wirkungsweise: Die Feder 116 drückt das Abdeckblech 108 und somit auch die Kufe 64 nach unten, bis diese Bodenkontakt hat. Das Abdeckblech 108 dreht über die Halterung 114, den Flansch 112 und die Hohlachse 110 auch das Getriebe 100 um die Längsachse der Antriebswelle 96. Diese Drehung wird über das Getriebe 100, die Welle 112 und die Arme 98 schließlich auch auf die Elemente 66 zur Bearbeitung der Pflanzenstümpfe 74 übertragen. Die durch die Welle 78 definierte Drehachse, um welche die Elemente 66 zur Bearbeitung der Pflanzenstümpfe 74 im Betrieb rotieren, ist, wie in der Figur 3 gezeigt, nach hinten und oben geneigt. Dadurch erreicht man, dass die Pflanzenstümpfe 74 der geernteten Pflanzen 118, deren Höhe zunächst durch die Höhe der Schneidscheiben der Einzugs- und Mähtrommeln 72 über dem Boden vorgegeben ist, im vorderen Bereich des Mulchgeräts 60 ein erstes Mal durch ein Element 66 zur Bearbeitung der Pflanzenstümpfe 74 erfasst werden. Die dann noch im Boden verbleibenden, bereits bearbeiteten und gekürzten (abgeschlagenen) Pflanzenstümpfe 74' werden anschließend noch ein zweites Mal im rückwärtigen Bereich des Mulchgeräts 60 durch eines der Elemente 66 zur Bearbeitung der Pflanzenstümpfe 74 bearbeitet und in Bodennähe abgeschlagen. Demnach wird die Bearbeitungsqualität der Pflanzenstümpfe 74, 74' wesentlich verbessert. Um die Wirkung noch weiter zu verbessern, könnte man die vorlaufenden Kanten der Arme 98 mit Schneiden ausstatten. Die beschriebene Bodenanpassung erfolgt für jedes Mulchgerät 60 des Erntevorsatzes 20 getrennt voneinander.

Ein weiterer Vorteil der frei pendelnden Aufhängung der Welle 112 und der Elemente 100 zur Bearbeitung der Pflanzenstümpfe 116 und ihrer bodenkonturenfolgenden Positionssteuerung mittels der Kufe 64 liegt darin, dass die Elemente 66 bei geeigneter Drehrichtung der Welle 112, in dem Fall, dass sie sich in unbeabsichtigter Weise in den Boden oder einen Erdhaufen eingearbeitet haben, aufgrund des in diesem Fall entstehenden Drehmoments, das die Elemente 66 zur Bearbeitung der Pflanzenstümpfe 74 aufgrund des Antriebs über die Welle 78 auf den Boden ausüben, die Welle 78 um die Längsachse der Antriebswelle 96 nach hinten und oben drehen und sich somit selbsttätig aus dem Boden befreien. Für den Fall, dass keine Bearbeitung der Pflanzenstümpfe 74 beabsichtigt sein sollte, kann das Mulchgerät 60 vom Erntevorsatz 20 abgebaut werden oder die Welle 78 wird durch eine Kupplung o.ä. von der Antriebswelle 96 getrennt oder die Arme 98 von der Welle 78 abgebaut.

## Patentansprüche

1. Erntevorsatz (20) in Form eines Mähvorsatzes zur Ernte ganzer Maispflanzen, mit einem in einer Vorwärtsrichtung (V) über ein Feld bewegbaren Rahmen (84), an dem eine oder mehrere seitlich nebeneinander positionierte Ernteeinrichtungen zur Ernte von Maispflanzen und stromab der Ernteeinrichtungen angeordnete Mulcheinrichtungen (60) mit durch eine Welle (78) drehbar antreibbaren Elementen (66) zur Bearbeitung der nach dem Ernten im Boden verbliebenen Pflanzenstümpfe (74) angebracht sind, wobei die Ernteeinrichtungen in Form von Mäh- und Einzugseinrichtungen (72) mit um etwa vertikale Achsen rotierenden, übereinander angeordneten Förderscheiben mit um den Rand verteilten Aussparungen zum Abtransport der Pflanzen und darunter angeordneten Schneidscheiben ausgeführt sind, **dadurch gekennzeichnet, dass** die Mulcheinrichtungen (60) getrennt voneinander gegenüber dem Rahmen (84) höhenbeweglich um sich quer zur Vorwärtsrichtung (V) des Erntevorsatzes (20) und horizontal erstreckende Achsen schwenkbar am Rahmen (84) angelenkt und auf Kufen (64) abgestützt sind, welche der Bodenkontur folgen und unterhalb der Elemente (66) angeordnet sind, und dass die Wellen (78) der Mulcheinrichtungen (60) jeweils über ein zugeordnetes Getriebe (100) antreibbar sind, welches die Welle (78) mit einer in einem hohlen Querträger des Rahmens (84) angeordneten, zum Antrieb der Mäh- und Einzugseinrichtungen (72) dienenden Antriebswelle (96) antriebsmäßig verbindet und um die Achse der Antriebswelle (96) frei schwenkbar gelagert ist.

2. Erntevorsatz (20) nach Anspruch 1, wobei die Kufe (64) genau unterhalb der Elemente (66) angeordnet oder gegenüber diesen nach hinten versetzt ist.

3. Erntevorsatz (20) nach einem der Ansprüche 1 oder 2 wobei die Elemente (66) um eine schräg nach vorn und unten geneigte Drehachse antreibbar sind.

4. Erntevorsatz (20) nach einem der vorhergehenden Ansprüche, wobei die Kufen (64) der Mulcheinrichtungen (60) jeweils durch eine Feder (116) und/oder die Schwerkraft in Richtung auf den Boden vorgespannt sind.

5. Erntevorsatz (20) nach einem der vorhergehenden Ansprüche, wobei die Elemente (66) schneidend und/oder schlagend auf die Pflanzenstümpfe einwirken.

## Claims

1. Harvesting header (20) in the form of a mowing header for harvesting whole corn plants, with a frame (84) which is moveable over a field in a forwards direction (V) and to which are attached one or more harvesting devices positioned laterally next to one another for harvesting corn plants and mulching devices (60) which are arranged downstream of the harvesting devices and have elements (66), which are driveable rotatably by a shaft (78), for processing the plant stubble (74) remaining in the soil after the harvesting, wherein the harvesting devices are designed in the form of mowing and intake devices (72) having conveyor discs which rotate about approximately vertical axes, are arranged one above another and have recesses distributed around the edge for transporting away the plants, and cutting discs arranged below said conveying discs, **characterized in that** the mulching devices (60) are coupled pivotably to the frame (84) so as to be moveable vertically in relation to the frame (84) separately from one another about axes extending transversely with respect to the forwards direction (V) of the harvesting header (20) and horizontally, and are supported on runners (64) which follow the ground contour and are arranged below the elements (66), and **in that** the shafts (78) of the mulching devices (60) are each driveable via an assigned transmission (100) which connects the shaft (78) in terms of drive to a drive shaft (96), which is arranged in a hollow crossmember of the frame (84) and serves for driving the mowing and intake devices (72), and is mounted in a freely pivotable manner about the axis of the drive shaft (96) .

2. Harvesting header (20) according to Claim 1, wherein the runner (64) is arranged right below the elements (66) or is offset rearwards in relation thereto.

3. Harvesting header (20) according to either of Claims 1 and 2, wherein the elements (66) are driveable about an axis of rotation inclined obliquely forwards and downwards.

4. Harvesting header (20) according to one of the preceding claims, wherein the runners (64) of the mulching devices (60) are each prestressed in the direction of the ground by a spring (116) and/or gravity.

5. Harvesting header (20) according to one of the preceding claims, wherein the elements (66) act in a cutting and/or beating manner on the plant stubble.

## Revendications

1. Tête de récolte (20) sous la forme d'un bec de récolte pour récolter des plants de maïs entiers, comprenant un cadre (84) déplaçable sur un champ dans une direction d'avance (V), sur lequel sont montés un ou plusieurs dispositifs de récolte positionnés latéralement les uns à côté des autres pour récolter des plants de maïs et des dispositifs de paillis (60) disposés en aval des dispositifs de récolte, avec des éléments (66) pouvant être entraînés en rotation par un arbre (78), pour traiter les tiges des plants (74) restant dans le sol après la récolte, les dispositifs de récolte étant réalisés sous la forme de dispositifs de fauche et d'amenée (72) avec des disques de transport tournant autour d'axes approximativement verticaux, disposés les uns au-dessus des autres avec des évidements répartis autour du bord pour l'évacuation des plants et des disques de coupe disposés en dessous, **caractérisée en ce que** les dispositifs de paillis (60) sont articulés au cadre (84) séparément les uns des autres de manière déplaçable en hauteur par rapport au cadre (84) de manière à pouvoir pivoter autour d'axes s'étendant transversalement à la direction d'avance (V) de la tête de récolte (20) et horizontalement et sont supportés sur des patins (64) qui suivent le contour du sol et sont disposées en dessous des éléments (66), et **en ce que** les arbres (78) des dispositifs de paillis (60) peuvent chacun être entraînés par le biais d'une transmission associée (100) qui relie par entraînement l'arbre (78) à un arbre d'entraînement (96) disposé dans un support transversal creux du cadre (84), servant à l'entraînement des dispositifs de fauche et d'amenée (72) et qui est supportée de manière à pouvoir pivoter librement autour de l'axe de l'arbre d'entraînement (96).

2. Tête de récolte (20) selon la revendication 1, dans laquelle le patin (64) est disposé exactement en dessous des éléments (66) ou est décalé vers l'arrière par rapport à ceux-ci.

3. Tête de récolte (20) selon l'une quelconque des revendications 1 et 2, dans laquelle les éléments (66) peuvent être entraînés autour d'un axe de rotation incliné obliquement vers l'avant et vers le bas.

4. Tête de récolte (20) selon l'une quelconque des revendications précédentes, dans laquelle les patins (64) des dispositifs de paillis (60) sont à chaque fois précontraints par un ressort (116) et/ou par la force de pesanteur dans la direction du sol.

5. Tête de récolte (20) selon l'une quelconque des revendications précédentes, dans laquelle les éléments (66) agissent sur les tiges des plants en les coupant et/ou en les frappant.
